# EUROPÄISCHE PATENTSCHRIFT

(11) **EP 2 789 869 B1**
(45) Veröffentlichungstag und Bekanntmachung des Hinweises auf die Patenterteilung: **05.06.2019**
(21) Anmeldenummer: 14164196.9
(22) Anmeldetag: 10.04.2014
(51) Int. Cl.: E05F 15/611, F16D 43/202, F16D 7/04, F16D 7/02, F16D 43/21, F16H 35/10

(54) **Antriebseinrichtung mit Überlastschutz**
Drive device with overload protection
Dispositif d'entraînement avec protection contre les surcharges

(30) Priorität: 12.04.2013 DE 102013206538
(43) Veröffentlichungstag der Anmeldung: 15.10.2014
(73) Patentinhaber: Stabilus GmbH, 56070 Koblenz (DE)
(72) Erfinder: Thomas Müller, 56244 Leuterod (DE); Mathias Wieland, 56068 Koblenz (DE); Jörg Hillen, 56283 Nörtershausen (DE)
(74) Vertreter: Weickmann & Weickmann PartmbB

(56) Entgegenhaltungen:
- DE-U1- 9 110 953
- JP-A- 2011 112 072
- KR-A- 20020 035 553
- US-A- 3 593 830
- US-A- 4 991 473
- US-A1- 2004 107 537
- US-A1- 2004 216 273
- US-A1- 2006 287 157
- US-A1- 2010 186 528

## Beschreibung

Die Erfindung betrifft eine mit einem Überlastschutz ausgebildete Antriebseinrichtung. Derartige Antriebseinrichtungen finden beispielsweise in Kraftfahrzeugen als Heckklappenantriebe Anwendung, und zwar sowohl in der Ausgestaltung als Spindelantriebe als auch als Direktantriebe.

Eine Antriebseinrichtung mit Überlastschutz ist beispielsweise aus der DE 10 2009 011 184 A1 bekannt. In einem Antriebseinrichtungsgehäuse der bekannten Antriebseinrichtung ist eine Motorbaugruppe und eine dieser abtriebsseitig nachgeordnete Getriebebaugruppe aufgenommen. Zwischen dem Ausgangselement der Getriebebaugruppe und der Ausgangswelle der Antriebseinrichtung ist in dem Antriebseinrichtungsgehäuse ferner eine Überlastschutzvorrichtung angeordnet. Die bekannte Antriebseinrichtung weist einen insgesamt recht komplexen Aufbau auf.

Ähnliches gilt für die US 2004/107 537 A1, die gattungsgemäße US 2006/287 157 A1, die DE 91 10 953 U1, die US 4 991 473 A, die US 3 593 830 A, die US 2004/216 273 A1, die KR 20020035553 A und die US 2010/186 528 A1.

Es ist daher Aufgabe der vorliegenden Erfindung, eine mit einem Überlastschutz ausgebildete Antriebseinrichtung bereitzustellen, welche einen einfacheren und somit kostengünstiger fertigbaren Aufbau aufweist.

Diese Aufgabe wird erfindungsgemäß gelöst durch eine Antriebseinrichtung, umfassend: ein Antriebseinrichtungsgehäuse mit einer Längsachse, wenigstens eine in dem Antriebseinrichtungsgehäuse aufgenommene Getriebebaugruppe mit einem Getriebegehäuse, das in dem Antriebseinrichtungsgehäuse um die Längsachse des Antriebseinrichtungsgehäuse verdrehbar aufgenommen ist, ein in dem Antriebseinrichtungsgehäuse aufgenommenes und mit diesem bezüglich einer Verdrehung um dessen Längsachse drehfest verbundenes Eingriffselement, welches eine zur Längsachse im Wesentlichen orthogonal verlaufende Stirnfläche umfasst, wobei die Stirnfläche des Elements mit einer zugeordneten Gegenstirnfläche der Getriebebaugruppe oder einer der mehreren Getriebebaugruppen in reibschlüssigem und gewünschtenfalls zusätzlich formschlüssigem Eingriff steht, und eine in dem Antriebseinrichtungsgehäuse aufgenommene Feder, welche die Stirnfläche und die Gegenstirnfläche gegeneinander vorspannt.

Vergleicht man die erfindungsgemäße Antriebseinrichtung mit der bekannten Antriebseinrichtung, so stellt man fest, dass bei der erfindungsgemäßen Antriebseinrichtung höchstens zwei Komponenten erforderlich sind, um den Überlastschutz bereitzustellen, nämlich das die Stirnfläche aufweisende Eingriffselement und die die Stirnfläche und die Gegenstirnfläche gegeneinander vorspannende Feder. Demgegenüber ist bei der bekannten Antriebseinrichtung eine aus einer Vielzahl von Komponenten aufgebaute Überlastschutzbaugruppe vorgesehen. Die erheblich geringere Anzahl von Komponenten wird insbesondere dadurch ermöglicht, dass das die Stirnfläche aufweisende Eingriffselement mit dem Antriebseinrichtungsgehäuse bezüglich einer Verdrehung um dessen Längsachse drehfest verbunden ist und dass das Getriebegehäuse der Getriebebaugruppe in dem Antriebseinrichtungsgehäuse um die Längsachse des Antriebseinrichtungsgehäuse verdrehbar aufgenommen ist. Hierdurch kann das Getriebegehäuse nach dem Auslösen des Überlastschutzes, d.h. nach dem Außer-Eingriff-Treten von Stirnfläche und Gegenstirnfläche, in dem Antriebseinrichtungsgehäuse frei um dessen Längsachse rotieren mit der Folge, dass die Getriebebaugruppe ihre Getriebefunktion nicht mehr erfüllen kann. Bei der bekannten Antriebseinrichtung sind für eine vergleichbare Entkopplung zwei gesonderte Komponenten erforderlich, die zudem in der von der Getriebebaugruppe gesondert ausgebildeten Überlastschutzbaugruppe enthalten sind. Erst die Einbeziehung der Getriebebaugruppe, genauer gesagt des Getriebegehäuses, in die Überlastschutzfunktion ermöglicht die erfindungsgemäße Vereinfachung und kostengünstigere Fertigung der Antriebseinrichtung.

Für die beanspruchte Ausführungsform, bei welcher die Feder auf ein gesondertes Eingriffselement einwirkt, bei dem zur Bereitstellung des Überlastschutzes also zwei zusätzliche Komponenten vorgesehen sind, wird vorgeschlagen, dass sich die Feder einenends am Antriebseinrichtungsgehäuse oder einem mit diesem betriebsfest verbundenen Teil und andernends an dem Eingriffselement abstützt.

Falls die Antriebseinrichtung eine Mehrzahl von Getriebebaugruppen aufweist, ist es vorteilhaft, wenn die Gegenstirnfläche an der der Abtriebswelle der Antriebseinrichtung nächstgelegenen Getriebebaugruppe ausgebildet ist, und zwar auf deren der Abtriebswelle der Antriebseinrichtung nähergelegenen Seite. In diesem Fall entspricht das Auslegungsdrehmoment der Antriebseinrichtung dem Auslösedrehmoment des Überlastschutzes. Dies bedingt zwar eine entsprechend stark ausgelegte Feder, was aber keinen konstruktiven Nachteil darstellt, da auch für eine stark ausgelegte Feder üblicherweise ausreichender Bauraum vorhanden ist. Würde man die Gegenstirnfläche an einer von der Abtriebswelle der Antriebseinrichtung weiter entfernt gelegenen Position vorsehen, so hätte man zum einen das Untersetzungsverhältnis der zwischen der Abtriebswelle und der Gegenstirnfläche gelegenen Getriebebaugruppen bzw. Getriebestufen zu berücksichtigen und zum anderen deren Wirkungsgrad. Unter Berücksichtigung beider Effekte könnte zwar einerseits die Feder schwächer ausgelegt werden. Andererseits würde aber hierdurch auch die Toleranzbreite des Auslegungsdrehmoments der Antriebseinrichtung ansteigen, da die Toleranzbreite der Feder durch diesen beiden Effekte verstärkt würde.

Falls die konstruktive Auslegung der Mehrzahl von zwischen der Motorbaugruppe und der Abtriebswelle der Antriebseinrichtung angeordneten Getriebestufen eine Unterteilung dieser Getriebestufen in eine Mehrzahl von Getriebebaugruppen erfordert, beispielsweise weil das Getriebegehäuse der der Abtriebswelle nächstgelegenen Getriebestufe aus einem widerstandsfähigeren Material, beispielsweise Metall, gefertigt sein muss als das Getriebegehäuse der anderen Getriebebaugruppe bzw. Getriebebaugruppen, das beispielsweise aus Kunststoff gefertigt sein kann, so ist es im Hinblick auf die Herstellungskosten vorteilhaft, wenn die Gegenstirnfläche zwischen zwei der Mehrzahl von Getriebebaugruppen angeordnet ist.

Ferner kann vorgesehen sein, dass die Feder in dem Fall, dass die Antriebseinrichtung eine Mehrzahl von Getriebebaugruppen aufweist, zwischen zwei der Getriebebaugruppen angeordnet ist. Grundsätzlich ist es jedoch auch denkbar, dass sie zwischen der Motorbaugruppe und der der Motorbaugruppe nächstgelegenen Getriebebaugruppe angeordnet ist.

Bei allen Ausführungsformen und Ausführungsvarianten ist es grundsätzlich denkbar, die Überlastschutzfunktion allein durch einen Reibschluss von Stirnfläche und Gegenstirnfläche bereitzustellen. Zur einfacheren Erzielung der gewünschten Auslösedrehmomentwerte ist es jedoch bevorzugt, wenn zu dem Reibschluss auch noch ein Formschluss hinzutritt. Dieser kann beispielsweise dadurch bereitgestellt werden, dass die Stirnfläche und die Gegenstirnfläche mit Erhebungen und Vertiefungen ausgebildet sind, welche miteinander zusammenwirkende Schrägflächen aufweisen.

Diese Erhebungen und Vertiefungen können dabei beispielsweise in Form von Stirnverzahnungen ausgebildet sein. Im Normalbetrieb der Antriebseinrichtung ist die Vorspannkraft der Feder so groß, dass das von der Getriebebaugruppe abgegebene Drehmoment aufgrund des Formschlusses der Erhebungen und Vertiefungen übertragen wird. Dabei ist das übertragbare Drehmoment von der Höhe der Vorspannkraft der Feder, von dem Winkel der Schrägflächen und vom Haftreibungsbeiwert der Oberflächen der Schrägflächen abhängig. Neben der reibschlüssigen Wirkung ist somit auch eine formschlüssige Wirkung vorhanden. Reicht die Vorspannkraft der Feder zur Aufrechterhaltung des Reib- bzw. Reib-/Formschlusses nicht mehr aus, d.h. wird die Haftreibung zwischen Stirnfläche und Gegenstirnfläche durch das auf sie einwirkende Drehmoment überwunden, so treten Stirnfläche und Gegenstirnfläche außer Eingriff und der Überlastschutz wird ausgelöst.

Die Erhebungen können aber auch in Form von Wälzkörpern ausgebildet sein, die, beispielsweise federvorgespannt, in die Vertiefungen eingriefen. Gemäß einer weiteren Alternative können die Erhebungen und Vertiefungen in Form von gegeneinander verspannten Wälzkörperringen oder dergleichen vorgesehen sein.

Die erfindungsgemäße Art und Weise der Bereitstellung eines Überlastschutzes ist nicht auf eine spezielle Getriebeart beschränkt. Grundsätzlich kann sie bei jeder beliebigen Getriebeart verwirklicht werden. Vorteilhaft ist ihre Anwendung jedoch insbesondere im Zusammenhang mit Planetengetrieben oder/und Exzentergetrieben oder/und Taumelgetrieben oder/und Zykloidgetrieben oder/und Wellringgetrieben.

Im Fall von Exzentergetrieben oder/und Taumelgetrieben oder/und Zykloidgetrieben kann ferner eine Mehrzahl von Getrieberädern, beispielsweise Exzenterrädern oder/und Zykloidrädern oder/und Taumelrädern, eingesetzt werden, um die Biegekräfte, die auf die mit diesen Getrieberädern in Eingriff stehende antriebsseitige Exzenterwelle einwirken, zu reduzieren.

Nachzutragen ist noch, dass die Feder vorteilhafterweise als Schraubendruckfeder ausgebildet sein kann. Dies ist insbesondere im Hinblick auf die Unterbringung der Feder in dem beengten zur Verfügung stehenden Bauraum in der Antriebseinrichtung vorteilhaft. Darüber hinaus kann die Kraftübertragung durch einfache Anlage der Feder an den die Stirnfläche und die Gegenstirnfläche aufweisenden Bauteilen erfolgen. Denkbar ist auch der Einsatz von Tellerfedern, Gummifedern oder dergleichen anderen Federtypen.

Die Erfindung wird im Folgenden anhand der beigefügten Zeichnung an Ausführungsbeispielen näher erläutert werden. Es stellt dar:
- Figur 1: eine teilweise im Schnitt gehaltene perspektivische Darstellung einer ersten Ausführungsform einer erfindungsgemäßen Antriebseinrichtung;
- Figur 2: eine perspektivische Ansicht eines Teils der Komponenten der Antriebseinrichtung der Figur 1;
- Figur 3: eine im Schnitt gehaltene perspektivische Darstellung einer ersten nicht erfindungsgemäßen Antriebseinrichtung;
- Figur 4: eine Schnittansicht einer zweiten nicht erfindungsgemäßen Antriebseinrichtung;
- Figur 5: eine im Schnitt gehaltene perspektivische Darstellung einer Variante der dritten Ausführungsform der erfindungsgemäßen Antriebseinrichtung; und
- Figur 6: eine perspektivische Ansicht eines Teils der Komponenten der Antriebseinrichtung der Figur 5.

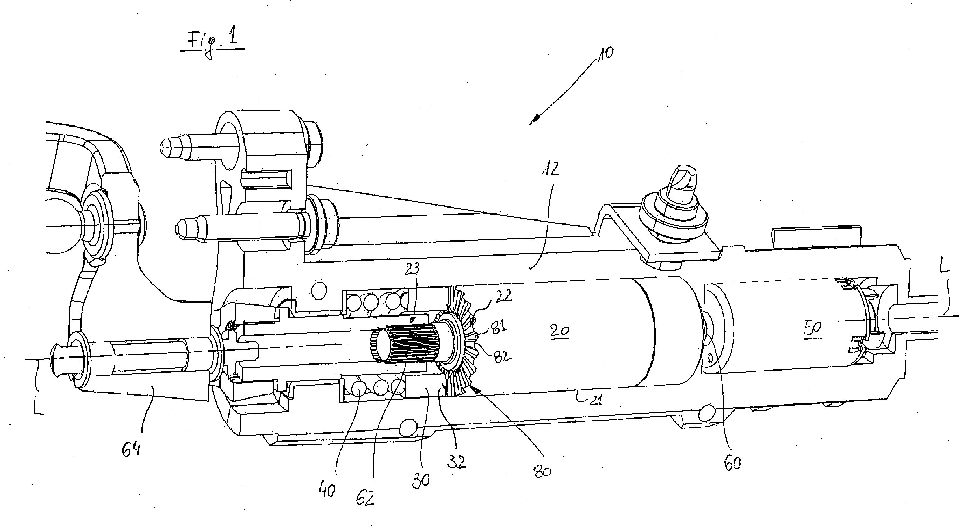

In Figur 1 ist eine erste Ausführungsform einer erfindungsgemäßen Antriebseinrichtung allgemein mit 10 bezeichnet. Die Antriebseinrichtung 10 umfasst ein Antriebseinrichtungsgehäuse 12 mit einer Längsachse L. In dem Antriebseinrichtungsgehäuse 12 ist eine Motorbaugruppe 50 und eine dieser abtriebsseitig nachgeordnete Getriebebaugruppe 20 aufgenommen. Die Getriebebaugruppe 20 weist ein Getriebegehäuse 21 auf, das in dem Antriebseinrichtungsgehäuse 12 um dessen Längsachse L verdrehbar aufgenommen ist. Bezugszeichen 60 und 62 bezeichnen die Eingangswelle (Antriebswelle) bzw. die Ausgangswelle (Abtriebswelle) der Getriebebaugruppe 20.

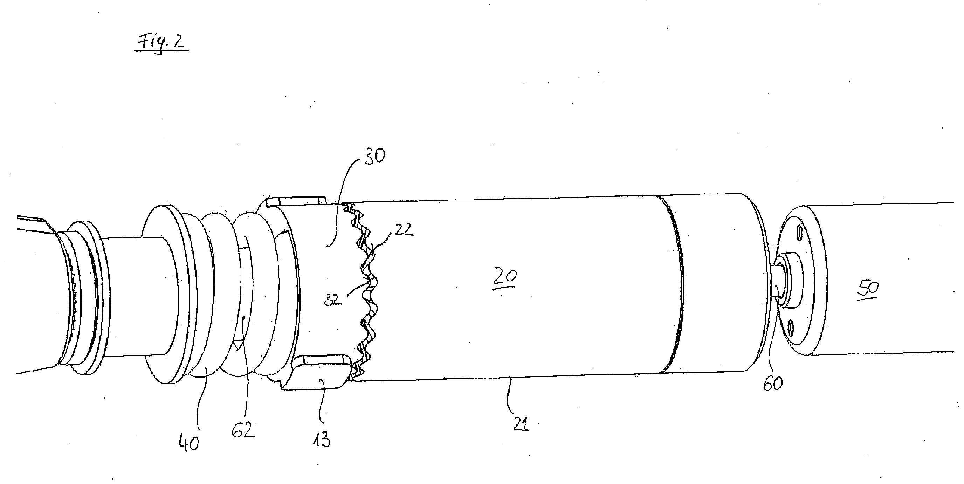

In dem Antriebseinrichtungsgehäuse 12 sind ferner an der Ausgangsseite der Getriebebaugruppe 20 ein Eingriffselement 30 und eine Feder 40 angeordnet. Das Eingriffselement 30 ist mit dem Antriebseinrichtungsgehäuse 12 über Vorsprünge 13 (siehe Figur 2), die in (nicht dargestellte) axial verlaufenden Längsnuten des Antriebseinrichtungsgehäuses 12 aufgenommen und geführt sind, bezüglich einer Verdrehung um die Längsachse L des Antriebseinrichtungsgehäuses 12 drehfest, relativ zu diesem jedoch in Richtung der Längsachse L verschiebbar, verbunden.

Das Eingrifselement 30 umfasst eine Stirnfläche 32, die zur Längsachse L des Antriebseinrichtungsgehäuses 12 im Wesentlichen orthogonal verläuft. Die Feder 40 hält die Stirnfläche 32 des Eingriffselements 30 mit einer zugeordneten Gegenstirnfläche 22 der Getriebebaugruppe 20 in reibschlüssigem oder formschlüssigen Eingriff. Das Eingriffselement 30, die Feder 40 und die zusammenwirkenden Stirnflächen 32 und 22 stellen zusammen den Überlastschutz bereit.

Bei der in den Figuren 1 und 2 gezeigten Ausführungsform ist die Überlastschutzfunktion durch einen Reibschluss von Stirnfläche 32 und Gegenstirnfläche 22 kombiniert mit einem Formschluss zwischen den beiden Flächen 32 und 22 realisiert. Die Vorteile einer (zusätzlichen) formschlüssigen Verbindung liegen in einer Verringerung der erforderlichen Federvorspannkraft (Flächenvorspannung), wodurch der Einfluss des Reibungsfaktors verringert wird.

Zur Realisierung des Formschlusses sind die Stirnfläche 32 und die Gegenstirnfläche 22 mit Erhebungen 81 und Vertiefungen 82 ausgebildet, welche miteinander zusammenwirken-de Schrägflächen aufweisen. Diese Erhebungen 81 und Vertiefungen 82 bilden gemeinsam eine Überlastschutzverzahnung 80, und zwar in dem konkreten Ausführungsbeispiel in Form einer Stirnverzahnung.

Im Normalbetrieb der Antriebseinrichtung 10 ist die Vorspannkraft der Feder 40 so groß, dass die Stirnfläche 12 mit der zugeordneten Gegenstirnfläche 22 in reibschlüssigen und gewünschtenfalls zusätzlich formschlüssigen Eingriff gehalten ist. Durch diesen Eingriff wird das Getriebegehäuse 21 relativ zum Antriebseinrichtungsgehäuse 12 unverdrehbar gehalten, so dass die Getriebebaugruppe 20 ihre Getriebefunktion ausüben kann, was zur Drehung der Abtriebswelle 62 führt.

Wird der Überlastschutz ausgelöst, so treten die Stirnfläche 32 und die Gegenstirnfläche 22 außer Eingriff, so dass sich das Getriebegehäuse 21 oder die Getriebebaugruppe 20 insgesamt um die Längsachse L drehen kann. Folglich kann die Getriebebaugruppe 20 ihre Getriebefunktion nicht mehr ausüben.

Bei der in den Figur 1 und 2 dargestellten Ausführungsform wirkt die Feder 40 auf das Eingriffselement 30 ein, wobei sie sich einenends am Antriebseinrichtungsgehäuse 12 und andernends an dem Eingriffselement 30 abstützt. Der Überlastschutz wird durch das Zusammenwirken dieser Komponenten realisiert.

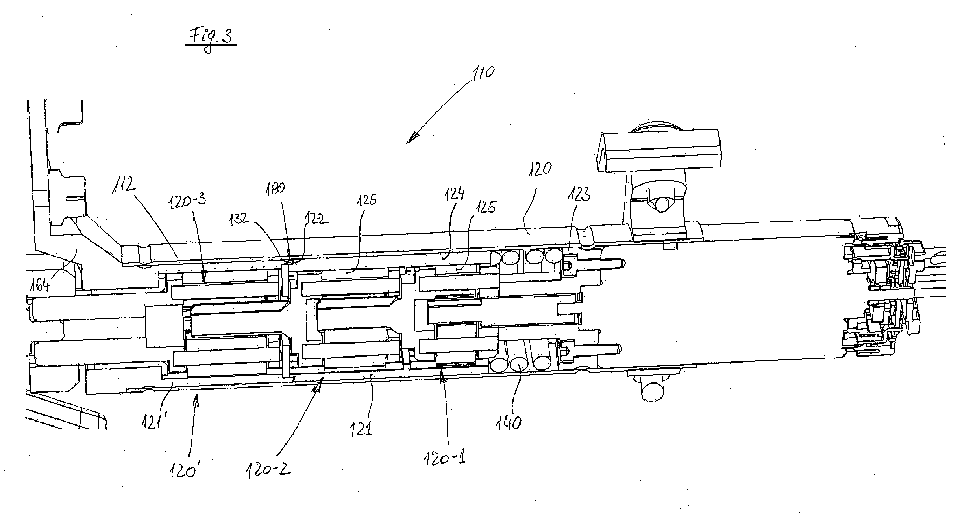

In Figur 3 ist eine erste nicht erfindungsgemäße Antriebseinrichtung dargestellt, die im Wesentlichen der Antriebseinrichtung gemäß Figuren 1 und 2 entspricht. Daher sind in Figur 3 analoge Teile mit gleichen Bezugszeichen versehen wie in Figuren 1 und 2, jedoch vermehrt um die Zahl 100. Die Antriebseinrichtung 110 gemäß Figur 3 wird im Folgenden daher nur insoweit beschrieben werden, als sie sich von der Ausführungsform gemäß Figuren 1 und 2 unterscheidet, wobei hiermit ansonsten ausdrücklich auf die Beschreibung der Ausführungsform gemäß Figuren 1 und 2 verwiesen sei.

Der Hauptunterschied zwischen der Antriebseinrichtung 110 gemäß Figur 3 und der Antriebseinrichtung 10 gemäß Figuren 1 und 2 besteht darin, dass sie mit einer geringeren Anzahl der zur Bereitstellung der Überlastschutzfunktion erforderlichen Komponenten auskommt. Insbesondere ist hierfür lediglich die Feder 140 als zusätzliche Komponente erforderlich. Dies wird dadurch möglich, dass das Getriebegehäuse 121 der Getriebebaugruppe 120 zur Bereitstellung des Überlastschutzes nicht mit einem gesonderten Eingriffselement zusammenwirkt, sondern mit dem Antriebseinrichtungsgehäuse 112 bzw. einem mit diesem betriebsfest verbundenen Antriebshalter 164.

In dem konkreten Beispiel der Figur 3 ist die Stirnfläche 132 an dem Antriebshalter 164 ausgebildet, während die Gegenstirnfläche an dem Getriebegehäuse 121 ausgebildet ist. Ferner stützt sich die Feder 140 mit ihrem einen Ende am Antriebseinrichtungsgehäuse 112 bzw. einem mit diesem betriebsfest verbundenen Teil 123 ab, während sich ihr anderes Ende am Getriebegehäuse 121 abstützt.

Die Antriebseinrichtung 110 aus Figur 3 verfügt insgesamt über drei jeweils als Planetengetriebe ausgebildete Getriebestufen 120-1, 120-2 und 120-3. Dabei bilden die Getriebestufen 120-1 und 120-2 zusammen die Getriebebaugruppe 120, während die Getriebestufe 120-3 eine weitere Getriebebaugruppe 120' bildet, deren Getriebegehäuse 121' mit dem Antriebshalter 164 einstückig ausgebildet ist und die Stirnverzahnung 132 trägt.

Wie man beim Betrachten der Figur 3 leicht einsieht, wäre es grundsätzlich auch möglich gewesen, alle drei Getriebestufen 120-1, 120-2 und 120-3 in einer einzigen Getriebebaugruppe zusammenzufassen. Die Aufteilung in zwei Getriebebaugruppen 120 und 120' ist im vorliegenden Fall aber konstruktiv bedingt, da sich bei der Auslegung der Antriebseinrichtung 120 herausgestellt hat, dass für das Getriebegehäuse der ersten beiden Getriebestufen 120-1 und 120-2 geringere Festigkeitsanforderungen bestehen als für das Getriebegehäuse der dritten Getriebestufe 120-3. Konkret kann das Getriebegehäuse 121 aus Kunststoff gefertigt sein, während das Getriebegehäuse 121' vorzugsweise aus Metall hergestellt ist. Die somit ohnehin vorhandene Trennung der beiden Gehäuse wurde erfindungsgemäß ausgenutzt, um an der Trennstelle gleichzeitig auch die Überlastschutzverzahnung 180 von Stirnfläche 132 und Gegenstirnfläche 122 auszubilden.

Gemäß Vorstehendem hat das Getriebegehäuse 121 bei der Antriebseinrichtung gemäß Figur 3 zwei Funktionen. Erstens dient es zur Aufnahme der für die Erzielung der Getriebefunktion erforderlichen Bauteile, wobei es gleichzeitig als Funktionselement bei der Erzielung der Getriebefunktion dient, nämlich als Hohlrad 124 des Planetengetriebes. Und zweitens dient es als in Längsrichtung L verschiebbares Schaltelement für die Bereitstellung der Überlastschutzfunktion.

In einer nicht dargestellten Ausführungsvariante könnte das Getriebegehäuse 121 auch zusammen mit den Planeten rädern 125 der Getriebestufen 120-1 und 120-2 in Längsrichtung L verschoben werden. In diesem Fall findet die Verlagerung zwischen den Planetenrädern 125 und ihren Achsen statt. Schließlich ist es auch denkbar, die gesamte Getriebebaugruppe 120 in Längsrichtung L zu verlagern.

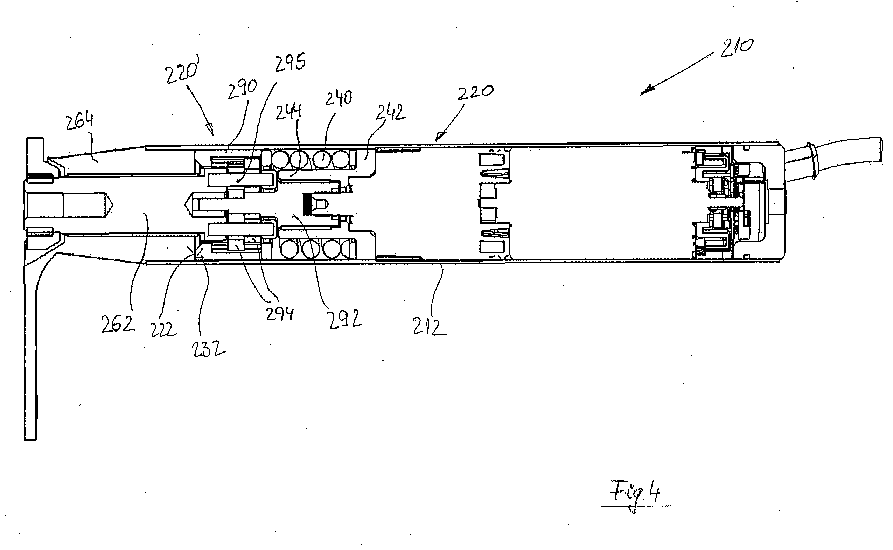

In Figur 4 ist eine zweite nicht erfindungsgemäße Antriebseinrichtung dargestellt, die im Wesentlichen der Antriebseinrichtung gemäß Figur 3 entspricht. Daher sind in Figur 4 analoge Teile mit gleichen Bezugszeichen versehen wie in Figur 3, jedoch vermehrt um die Zahl 100, d.h. bezogen auf die Figuren 1 und 2 vermehrt um die Zahl 200. Die Antriebseinrichtung 210 gemäß Figur 4 wird im Folgenden daher nur insoweit beschrieben werden, als sie sich von der Ausführungsform gemäß Figur 3 unterscheidet, wobei hiermit ansonsten ausdrücklich auf die Beschreibung der Ausführungsform gemäß Figur 3 einschließlich der Bezugnahme auf die Beschreibung der Ausführungsform gemäß Figuren 1 und 2 verwiesen sei.

Die Antriebseinrichtung 210 gemäß Figur 4 verfügt wie die Antriebseinrichtung 110 gemäß Figur 3 über zwei Getriebebaugruppen 220 und 220', wobei die Getriebebaugruppe 220 wiederum zwei Getriebestufen beinhalten kann, während die Getriebebaugruppe 220' lediglich eine Getriebestufe umfasst.

Die Antriebseinrichtung 210 gemäß Figur 4 unterscheidet sich von der Antriebseinrichtung 110 gemäß Figur 3 jedoch in folgenden Punkten: Erstens ist die Feder 240 zwischen den beiden Getriebebaugruppen 220 und 220' angeordnet. Zweitens bildet die der Abtriebswelle 262 näher gelegene Getriebebaugruppe 220' die Getriebebaugruppe im Sinne der Ansprüche. Und drittens ist die Getriebebaugruppe 220' als Exzentergetriebe ausgebildet.

Gemäß Vorstehendem ist die Überlastschutzverzahnung 280 zwischen dem Hohlrad 290 der Getriebebaugruppe 220', das die Gegenstirnfläche 222 trägt, und dem Antriebshalter 264, der die Stirnfläche 232 trägt, ausgebildet. Der Eingriff zwischen Stirnfläche 232 und Gegenstirnfläche 222 wird durch die Feder 240 gesichert, die sich mit ihrem vom Hohlrad 290 abgewandten Ende an der mit dem Antriebseinrichtungsgehäuse 212 betriebsfest verbundenen Getriebebaugruppe 220 abstützt und von einer Aufnahmebuchse 242 geführt ist. Zwischen der Feder 240 und dem Hohlrad 290 ist ferner eine Schutzscheibe 244 vorgesehen. Bei Überlast wird das Hohlrad 290, gewünschtenfalls zusammen mit den Exzenterrädern 294 in Längsrichtung L verschoben.

Nachzutragen ist noch, dass bei der in Figur 4 dargestellten Antriebseinrichtung zwei Exzenterräder 294 vorgesehen sind, die auf der Exzenterwelle 92 um 180° versetzt angeordnet sind. Hierdurch kann die Biegebeanspruchung der Exzenterwelle 292 gemindert werden.

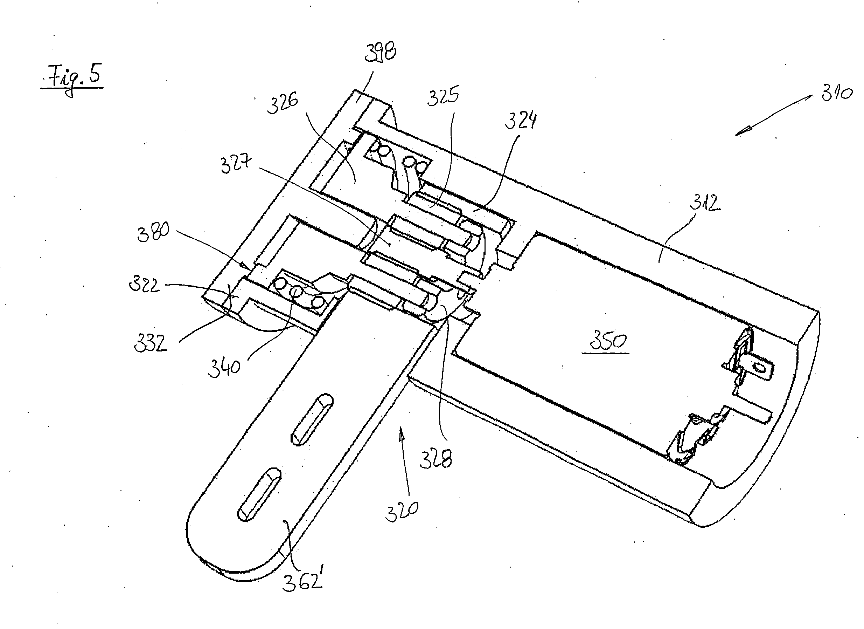

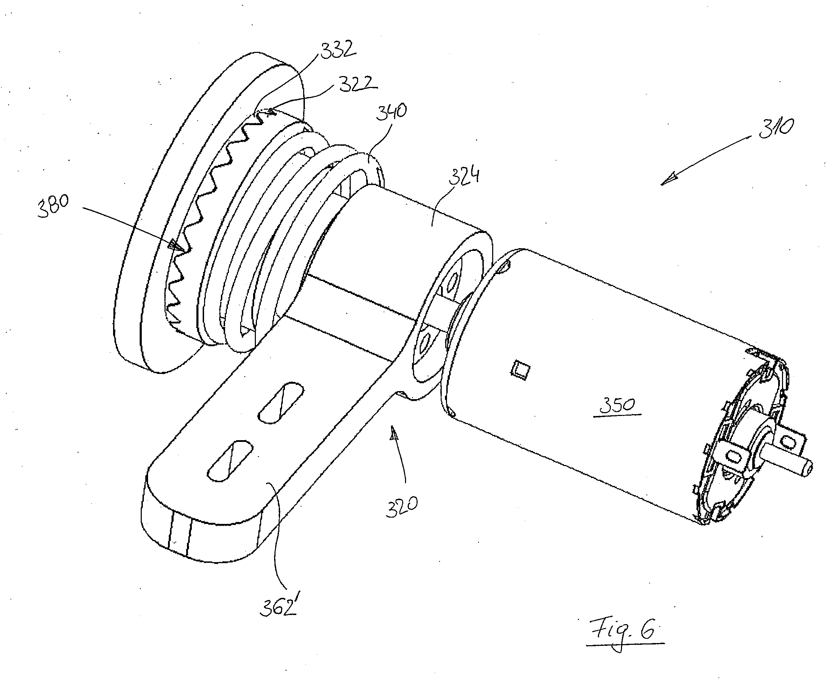

In den Figuren 5 und 6 ist eine zweite Ausführungsform einer erfindungsgemäßen Antriebseinrichtung dargestellt, die im Wesentlichen der Antriebseinrichtung gemäß Figuren 1 und 2 entspricht. Daher sind in den Figuren 5 und 6 analoge Teile mit gleichen Bezugszeichen versehen wie in Figuren 1 und 2, jedoch vermehrt um die Zahl 300. Die Antriebseinrichtung 310 gemäß Figuren 5 und 6 wird im Folgenden daher nur insoweit beschrieben werden, als sie sich von der Ausführungsform gemäß Figuren 1 und 2 unterscheidet, wobei hiermit ansonsten ausdrücklich auf die Beschreibung der Ausführungsform gemäß Figuren 1 und 2 verwiesen sei.

Die Antriebseinrichtung 310 gemäß Figuren 5 und 6 unterscheidet sich von der Antriebseinrichtung 10 gemäß Figuren 1 und 2 vor allem dadurch, dass das Hohlrad 324 als Getriebeausgang 362' benutzt wird.

Die Getriebebaugruppe 320 ist als Planetengetriebe realisiert und umfasst neben dem Hohlrad 224, Planetenräder 325, die am Planetenträger 326 gelagert sind, sowie ein Sonnenrad 327, das mit der Motorbaugruppe 350 betriebsfest verbunden ist. Ein Kulissenring bzw. eine Schutzkappe 328 ist an den Planetenachsen des Planetenträgers 326 angebracht.

Die Überlastschutzfeder 340 stützt sich mit ihrem einen Ende am Antriebseinrichtungsgehäuse 312 und mit ihrem anderen Ende am Planetenträger 326 ab. Die Überlastschutzverzahnung 380 ist zwischen einer mit dem Antriebseinrichtungsgehäuse 312 betriebsfest verbundenen Endplatte 398, die die Stirnfläche 332 trägt, und dem Planetenträger, der die Gegenstirnfläche 322 trägt, ausgebildet.

Die Antriebseinrichtung 310 gemäß Figuren 5 und 6 unterscheidet sich von der Antriebseinrichtung 10 gemäß Figuren 1 und 2 vor allem dadurch, dass das Hohlrad 324 als Getriebeausgang 362' benutzt wird.

Die Getriebebaugruppe 320 ist als Planetengetriebe realisiert und umfasst neben dem Hohlrad 224, Planetenräder 325, die am Planetenträger 326 gelagert sind, sowie ein Sonnenrad 327, das mit der Motorbaugruppe 350 betriebsfest verbunden ist. Ein Kulissenring bzw. eine Schutzkappe 328 ist an den Planetenachsen des Planetenträgers 326 angebracht.

Die Überlastschutzfeder 340 stützt sich mit ihrem einen Ende am Antriebseinrichtungsgehäuse 312 und mit ihrem anderen Ende am Planetenträger 326 ab. Die Überlastschutzverzahnung 380 ist zwischen einer mit dem Antriebseinrichtungsgehäuse 312 betriebsfest verbundenen Endplatte 398, die die Stirnfläche 332 trägt, und dem Planetenträger, der die Gegenstirnfläche 322 trägt, ausgebildet.

## Patentansprüche

1. Antriebseinrichtung (10; 310), umfassend:
ein Antriebseinrichtungsgehäuse (12; 312) mit einer Längsachse (L),
wenigstens eine in dem Antriebseinrichtungsgehäuse (12; 312) aufgenommene Getriebebaugruppe (20; 320)
ein in dem Antriebseinrichtungsgehäuse (12; 312) aufgenommenes und mit diesem bezüglich einer Verdrehung um dessen Längsachse (L) drehfest verbundenes Eingriffselement (30), welches eine zur Längsachse (L) im Wesentlichen orthogonal verlaufende Stirnfläche (32; 332) umfasst,
wobei die Stirnfläche (32; 332) des Eingriffselements (30) mit einer zugeordneten Gegenstirnfläche (22; 322) der Getriebebaugruppe (20; 320) oder einer der mehreren Getriebebaugruppen in reibschlüssigem Eingriff steht, und
eine in dem Antriebseinrichtungsgehäuse (12; 312) aufgenommene Feder (40; 340), welche die Stirnfläche (32; 332) und die Gegenstirnfläche (22; 322) gegeneinander vorspannt, und
sich die Feder (40; 340) einenends am Antriebseinrichtungsgehäuse (12; 312) oder einem mit diesem betriebsfest verbundenen Teil und andernends an dem Eingriffselement (30; 326) abstützt, **gekennzeichnet durch** die Getriebebaugruppe (20; 120; 220'; 320) mit einem Getriebegehäuse (21; 121; 221'; 321), das in dem Antriebseinrichtungsgehäuse (12; 112; 212; 312) um die Längsachse (L) des Antriebseinrichtungsgehäuse (12; 112; 212; 312) verdrehbar aufgenommen ist.

2. Antriebseinrichtung nach Anspruch 1,
**dadurch gekennzeichnet, dass** eine von dem Getriebegehäuse (324) verschiedene Komponente (326) der Getriebebaugruppe (320) relativ zu wenigstens einem Teil der restlichen Komponenten der Getriebebaugruppe (320) in Richtung der Längsachse (L) verlagerbar ist.

3. Antriebseinrichtung nach einem der Ansprüche 1 bis 2,
**dadurch gekennzeichnet, dass** die Antriebseinrichtung (110) eine Mehrzahl von Getriebebaugruppen (120) aufweist und die Gegenstirnfläche (122), an der der Abtriebswelle (162) der Antriebseinrichtung (110) nächstgelegenen Getriebebaugruppe (120-3) ausgebildet ist, und zwar auf deren der Abtriebswelle (162) der Antriebseinrichtung (110) nähergelegenen Seite.

4. Antriebseinrichtung nach einem der Ansprüche 1 bis 3,
**dadurch gekennzeichnet, dass** die Antriebseinrichtung (10) eine Mehrzahl von Getriebebaugruppen (20) aufweist und die Gegenstirnfläche (22), zwischen zwei der Mehrzahl von Getriebebaugruppen (20) angeordnet ist.

5. Antriebseinrichtung nach einem der Ansprüche 1 bis 4,
**dadurch gekennzeichnet, dass** die Stirnfläche (32) und die Gegenstirnfläche (22) mit Erhebungen (81) und Vertiefungen (82) ausgebildet sind, welche miteinander zusammenwirkende Schrägflächen aufweisen.

6. Antriebseinrichtung nach einem der Ansprüche 1 bis 5,
**dadurch gekennzeichnet, dass** die Antriebseinrichtung (110) eine Mehrzahl von Getriebebaugruppen (120; 120') aufweist und die Feder (140), zwischen zwei der Getriebebaugruppen (120; 120') angeordnet ist.

7. Antriebseinrichtung nach einem der Ansprüche 1 bis 6,
**dadurch gekennzeichnet, dass** die Getriebebaugruppe (20; 120; 120'; 220; 320) ein Planetengetriebe oder ein Exzentergetriebe oder ein Taumelgetriebe oder ein Zykloidgetriebe oder ein Wellringgetriebe ist.

8. Antriebseinrichtung nach einem der vorhergehenden Ansprüche,
**dadurch gekennzeichnet, dass** die Stirnfläche (32; 332) des Eingriffselements (30) mit der zugeordneten Gegenstirnfläche (22; 322) der Getriebebaugruppe (20; 320) oder eine der mehreren Getriebebaugruppen zusätzlich in formschlüssigem Eingriff steht.

## Claims

1. Drive mechanism (10; 310) comprising:
a drive mechanism housing (12; 312) having a longitudinal axis (L), at least one gear assembly (20; 320) accommodated in the drive mechanism housing (12; 312), an engagement element (30) accommodated in the drive mechanism housing (12; 312) connected thereto for rotation therewith with respect to the longitudinal axis (L) thereof, which engagement element comprises an end face (32; 332) extending substantially orthogonally to the longitudinal axis (L), the end face (32; 332) of the engagement element (30) frictionally engaging with an associated counter end face (22; 322) of the gear assembly (20; 320) or one of the plurality of gear assemblies, and a spring (40; 340) accommodated in the drive mechanism housing (12; 312), which spring preloads the end face (32; 332) and the counter end face (22; 322) against one another, and the spring (40; 340) being supported at one end on the drive mechanism housing (12; 312) or a part operatively connected thereto and at the other end on the engagement element (30; 326), **characterised by** the gear assembly (20; 120; 220'; 320) which has a gear housing (21; 121; 221'; 321) that is accommodated in the drive mechanism housing (12; 112; 212; 312) for rotation about the longitudinal axis (L) of the drive mechanism housing (12; 112; 212; 312).

2. Drive mechanism according to claim 1, **characterised in that** a component (326) of the gear assembly (320) that is different from the gear housing (324) is displaceable relative to at least some of the rest of the components of the gear assembly (320) in the direction of the longitudinal axis (L).

3. Drive mechanism according to either claim 1 or claim 2, **characterised in that** the drive mechanism (110) comprises a plurality of gear assemblies (120) and the counter end face (122) is formed on the gear assembly (120-3) nearest the output shaft (162) of the drive mechanism (110), specifically on the side thereof closer to the output shaft (162) of the drive mechanism (110).

4. Drive mechanism according to any of claims 1 to 3, **characterised in that** the drive mechanism (10) has a plurality of gear assemblies (20) and the counter end face (22) is arranged between two of the plurality of gear assemblies (20).

5. Drive mechanism according to any of claims 1 to 4, **characterised in that** the end face (32) and the counter end face (22) have elevations (81) and recesses (82) which have interacting inclined surfaces.

6. Drive mechanism according to any of claims 1 to 5, **characterised in that** the drive mechanism (110) has a plurality of gear assemblies (120, 120') and the spring (140) is arranged between two of the gear assemblies (120, 120').

7. Drive mechanism according to any of claims 1 to 6, **characterised in that** the gear assembly (20; 120; 120'; 220; 320) is a planetary gear or an eccentric gear or a wobble gear or a cycloidal gear or a corrugated ring gear.

8. Drive mechanism according to any of the preceding claims, **characterised in that** the end face (32; 332) of the engagement element (30) is also interlockingly engaged with the associated counter end face (22; 322) of the gear assembly (20; 320) or one of the plurality of gear assemblies.

## Revendications

1. Dispositif d'entraînement (10, 310), comprenant :
un carter de dispositif d'entraînement (12 ; 312) avec un axe longitudinal (L),
au moins un bloc de transmission (20 ; 320) logés dans le carter de dispositif d'entraînement (12 ; 312) un élément d'engagement (30) logé dans le carter de dispositif d'entraînement (12 ; 312) et relié de façon solidaire en rotation avec celui-ci par rapport à une rotation autour de son axe longitudinal (L), ledit élément comprenant une surface frontale (32 ; 332) passant essentiellement orthogonalement à l'axe longitudinal (L),
dans lequel la surface frontale (32 ; 332) de l'élément d'engagement (30) est en prise par friction avec une contre-surface frontale affectée (22 ; 322) du bloc de transmission (20 ; 320) ou l'un des différents blocs de transmission, et un ressort (40 ; 340) logé dans le carter de dispositif d'entraînement (12 ; 312), lequel précontraint la surface frontale (32 ; 332) et la contre-surface frontale (22 ; 322) l'une contre l'autre et le ressort (40 ; 340) s'appuie, à une extrémité, sur le carter de dispositif d'entraînement (12 ; 312) ou une partie reliée de façon fixe à celui-ci, et à l'autre extrémité, sur l'élément d'engagement (30 ; 326), **caractérisé par** le bloc de transmission (20 ; 120 ; 220' ; 320) avec un carter de transmission (21 ; 121 ; 221' ; 321) qui est logé de façon pivotante dans le carter de dispositif d'entraînement (12 ; 112 ; 212 ; 312) autour de l'axe longitudinal (L) du carter de dispositif d'entraînement (12 ; 112 ; 212 ; 312).

2. Dispositif d'entraînement selon la revendication 1, **caractérisé en ce qu'**une partie constituante (326) du bloc de transmission (320), différente du carter de transmission (324), peut être déplacée dans le sens de l'axe longitudinal (L) par rapport à au moins une partie des autres parties constituantes du bloc de transmission (320).

3. Dispositif d'entraînement selon l'une des revendications 1 à 2, **caractérisé en ce que** le dispositif d'entraînement (110) présente une pluralité de blocs de transmission (120) et **en ce que** la contre-surface frontale (122) est conçue sur le bloc de transmission (120-3) le plus proche de l'arbre mené (162) du dispositif d'entraînement (110), à savoir sur son côté placé près de l'arbre mené (162) du dispositif d'entraînement (110).

4. Dispositif d'entraînement selon l'une des revendications 1 à 3, **caractérisé en ce que** le dispositif d'entraînement (10) présente une pluralité de blocs de transmission (20) et **en ce que** la contre-surface frontale (22) est disposée entre deux de la pluralité de blocs de transmission (20).

5. Dispositif d'entraînement selon l'une des revendications 1 à 4, **caractérisé en ce que** la surface frontale (32) et la contre-surface frontale (22) sont conçues avec des élévations (81) et des cavités (82), lesquelles présentent des surfaces inclinées interagissant ensemble.

6. Dispositif d'entraînement selon l'une des revendications 1 à 5, **caractérisé en ce que** le dispositif d'entraînement (110) présente une pluralité de blocs de transmission (120 ; 120') et **en ce que** le ressort (140) est disposé entre deux des blocs de transmission (120 ; 120').

7. Dispositif d'entraînement selon l'une des revendications 1 à 6, **caractérisé en ce que** le bloc de transmission (20 ; 120 ; 120' ; 220 ; 320) est un engrenage planétaire ou un engrenage excentrique ou un engrenage oscillant ou un engrenage cycloïdal ou un engrenage à anneau ondulé.

8. Dispositif d'entraînement selon l'une des revendications précédentes, **caractérisé en ce que** la surface frontale (32 ; 332) de l'élément d'engagement (30) est, en outre, en prise par engagement positif avec la contre-surface frontale affectée (22 ; 322) du bloc de transmission (20 ; 320) ou de l'un des différents blocs de transmission.
